# EUROPEAN PATENT APPLICATION

(11) **EP 1 482 438 A1**
(43) Date of publication of application: **01.12.2004**
(21) Application number: 04252888.5
(22) Date of filing: 18.05.2004
(51) Int. Cl.: G06F 17/60

(54) **Method and system for determining the recyclability of a product**

(30) Priority: 27.05.2003 US 446293
(71) Applicant: Hewlett-Packard Development Company, L.P., Houston, Texas 77070 (US)
(72) Inventor: Metzger, Brianne L., Cambridge, MA 02139 (US); Gately, Erin M., Portland, OR 97213 (US); Frederick, Timothy B., San Francisco, CA 94114 (US)
(74) Representative: Exell, Jonathan Mark

(57) **Abstract**

A method and system for determining the recyclability of a product is disclosed. Through the use of the method and system in accordance with the present invention, the recyclability of a product [402] can be calculated during the design phase of the product [402] and subsequently utilized to adjust the design of the product [402] to make sure that the product [402] conforms with specific recyclability criteria. An aspect of the invention is a method for determining the recyclability of a product [402]. The method includes implementing a query [400] based on a plurality of recyclability criteria of the product [402], generating results [600] based on responses to the query [400] and determining the recyclability of the product [402] based on the results [600] of the query [400].

## Description

### FIELD OF THE INVENTION

The present invention relates generally to recycling and more particularly to a method and system for determining the recydability of a product.

### BACKGROUND OF THE INVENTION

Environmental awareness has become an increasingly growing trend in our society. Energy conservation and efficiency go a long way in the preservation of the planet's rich natural resources and promoting a healthy environment. Along these lines, society's growing dependence on electronics/computer products both in the home environment and in the workplace has given rise to a new environmental challenge: electronic waste. One way to combat electronic waste is through the recycling of computer products.

In fact, many countries are proposing specific recycling guidelines that manufacturers of computers and the related components will have to comply with in order to continue selling the products. One such proposal is the Directive of the European Union on Waste Electrical and Electronic Equipment (WEEE Directive). The WEEE Directive is a directive on the restriction of the use of certain hazardous substances in electrical and electronic equipment. The proposed Directive is designed to tackle the fast increasing waste stream of electrical and electronic equipment and complements European Union measures on landfill and incineration of waste. Increased recycling of electrical and electronic equipment, in accordance with the requirements of the WEEE Directive, will limit the total quantity of waste going to final disposal. Currently however, there are no design tools in existence that enable designers to determine whether the product being designed is in compliance with this Directive or any such regulatory guideline.

Accordingly, what is needed is a method and system that allows product designers the ability to determine whether the product being designed is in compliance with certain regulatory guidelines. The method and system should be simple, cost effective and capable of being easily adapted to existing technology. The present invention addresses these needs.

### SUMMARY OF THE INVENTION

A method and system for determining the recyclability of a product is disclosed. Through the use of the method and system in accordance with the present invention, the recyclability of a product can be calculated during the design phase of the product and subsequently utilized to adjust the design of the product to make sure that the product conforms with specific recyclability criteria.

A first aspect of the invention is a method for determining the recyclability of a product. The method includes implementing a query based on a plurality of recyclability criteria of the product, generating results based on responses to the query and determining the recyclability of the product based on the results of the query.

A second aspect of the invention is a system for determining the recyclability of a product. The system includes a graphical user interface and a software tool coupled to the graphical user interface wherein the software tool is capable of implementing a query based on a plurality of recyclability criteria of the product, generating results based on responses to the query and determining the recyclability of the product based on the results of the query.

Other aspects and advantages of the present invention will become apparent from the following detailed description, taken in conjunction with the accompanying drawings, illustrating by way of example the principles of the invention.

### BRIEF DESCRIPTION OF THE DRAWINGS

Figure 1 is a high-level flow chart of a method in accordance with an embodiment of the present invention.
Figure 2 is an illustration of a recyclability index system in accordance with an embodiment of the present invention.
Figure 3 shows an example of a computer system that could be utilized in conjunction with an embodiment of the present invention.
Figure 4 shows an example of a query sheet in accordance with an embodiment of the present invention.
Figure 5 shows an EOL treatment sheet in accordance with an embodiment of the present invention.
Figure 6 shows a summary sheet in accordance with an embodiment of the present invention.

### DETAILED DESCRIPTION

The present invention relates to a method and system for determining the recyclability of a product. The following description is presented to enable one of ordinary skill in the art to make and use the invention and is provided in the context of a patent application and its requirements. Various modifications to the embodiments and the generic principles and features described herein will be readily apparent to those skilled in the art. Thus, the present invention is not intended to be limited to the embodiment shown but is to be accorded the widest scope consistent with the principles and features described herein.

A method and system for determining the recyclability of a product is disclosed. Through the use of the method and system in accordance with the present invention, the recyclability of a product can be calculated during the design phase of the product and subsequently utilized to adjust the design of the product to make sure that the product conforms with specific recyclability criteria.

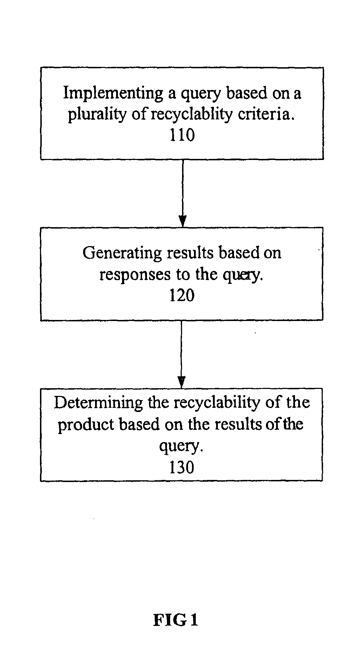

For a better understanding of the present invention please refer to Figure 1. Figure 1 is a high-level flow chart of a method in accordance with an embodiment of the present invention. A first step 110 includes implementing a query based on a plurality of recyclability criteria. A second step 120 includes generating results based on the responses to the query. A final step 130 includes determining the recyclability of the product based on the results of the query.

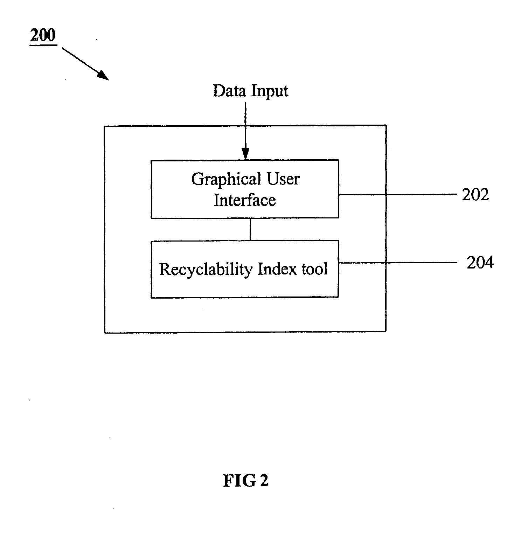

Figure 2 is an illustration of a recyclability index system 200 in accordance with an embodiment of the present invention. Recyclability index system 200 includes a graphical user interface 202 and a recyclability index tool 204. The graphical user interface 202 provides a convenient and efficient way for a user to enter data related to a particular product into the system 200. The recyclability index tool 204 then utilizes stored index formulas to operate upon data received from the user in order to generate a recyclability score for a particular.

A user interface includes a combination of menus, screen design, keyboard commands and command language which creates the way a user interacts with a computer. Although the above disclosed embodiment of the present invention is described as being utilized in conjunction with a graphical user interface, one of ordinary skill in the art will readily recognize that any of a variety of user interfaces could be implemented while remaining within the spirit and scope of the present invention.

In an embodiment, the recyclability index tool 204 is Excel-based. Excel is a full-featured spreadsheet program for computer systems from Microsoft. It has the capability to link many spreadsheets for consolidation and provides a wide variety of business graphics and charts for creating presentation materials. However, one of ordinary skill in the art will readily recognize that a variety of computer programs could be utilized while remaining within the spirit and scope of the present invention.

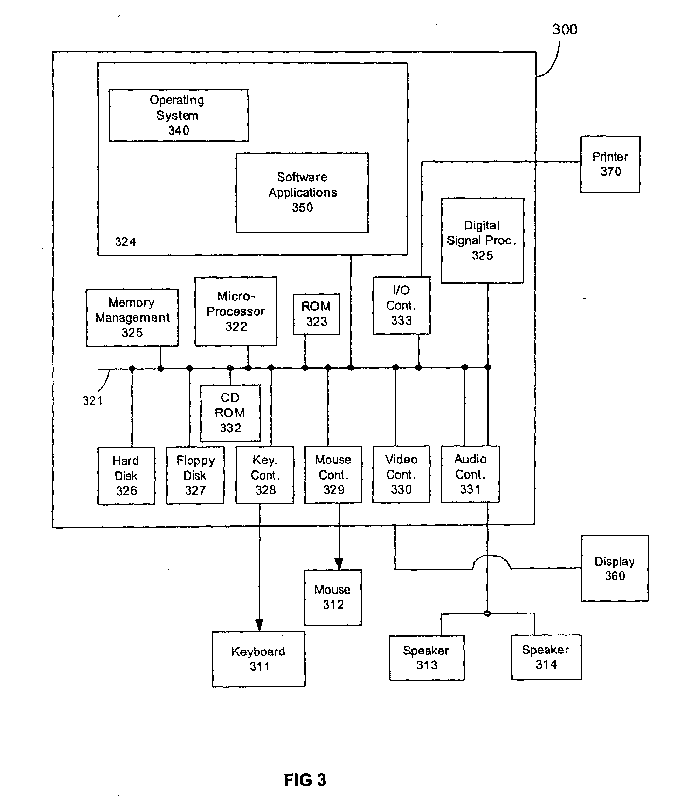

Recyclability index system 200 may be implemented as one or more respective software modules operating on a computer system. For an example of such a computer system, please refer to Figure 3. In Figure 3, a computer system 300, including, a keyboard 311, a mouse 312 and a printer 370 are depicted in block diagram form. The system 300 includes a system bus or plurality of system buses 321 to which various components are coupled and by which communication between the various components is accomplished. The microprocessor 322 is connected to the system bus 321 and is supported by read only memory (ROM) 323 and random access memory (RAM) 324 also connected to the system bus 321. A microprocessor is one of the Intel family of microprocessors including the 386, 486 or Pentium microprocessors. However, other microprocessors including, but not limited to, Motorola's family of microprocessors such as the 68000, 68020 or the 68030 microprocessors and various Reduced Instruction Set Computer (RISC) microprocessors such as the PowerPC chip manufactured by IBM. Other RISC chips made by Hewlett Packard, Sun, Motorola and others may be used in the specific computer.

The ROM 323 contains, among other code, the Basic Input-Output system (BIOS) which controls basic hardware operations such as the interaction of the processor and the disk drives and the keyboard. The RAM 324 is the main memory into which the operating system 340 and software applications 350 are loaded. The memory management chip 325 is connected to the system bus 321 and controls direct memory access operations including, passing data between the RAM 324 and hard disk drive 326 and floppy disk drive 327. The CD ROM 332 also coupled to the system bus 321 is used to store a large amount of data, e.g., a multimedia program or presentation.

Also connected to this system bus 321 are various I/O controllers: the keyboard controller 328, the mouse controller 329, the video controller 330, and the audio controller 331. As might be expected, the keyboard controller 328 provides the hardware interface for the keyboard 311, the mouse controller 329 provides the hardware interface for mouse 312, the video controller 330 is the hardware interface for the display 360, and the audio controller 331 is the hardware interface for the speakers 313, 314. Another I/O controller 333 enables communication with the printer 370.

One of ordinary skill in the art will readily recognize that the computer system 300 could comprise a personal-digital-assistant (PDA), a mobile phone, a laptop computer or a variety of other devices while remaining within the spirit and scope of the present invention.

The system 300 may also be utilized in conjunction with a distributed computing environment where tasks are performed by remote processing devices that are linked through a communications network. In a distributed computing environment, program modules may be located in both local and remote memory storage devices. Execution of the program modules may occur locally in a stand-alone manner or remotely in a client/server manner. Examples of such distributed computing environments include local area networks of an office, enterprise-wide computer networks, and the Internet. Additionally, the networks could communicate via wireless means or any of a variety of communication means while remaining within the spirit and scope of the present invention.

Please refer back to Figure 2. In an embodiment, the recyclability index tool 204 generates a query sheet that is displayed via the graphical user interface 202 wherein the query sheet includes a plurality of questions about product materials, disassembly procedures, hazardous substances, value recovery, material weights, etc. Based on the responses to the plurality of questions, the recyclability of the product is determined/calculated. In an embodiment, the recyclability of a product is the percentage of the product which is able to be recycled. The calculated recyclability of the product can then be utilized by product designers to make changes, if needed, to the existing design of the product in order to ensure that the product is in compliance with particular environment regulations.

One such proposed environmental regulation is the Waste Electrical and Electronic Equipment (WEEE) Directive. The WEEE Directive is a directive on the restriction of the use of certain hazardous substances in electrical and electronic equipment. The proposed Directive is designed to tackle the fast increasing waste stream of electrical and electronic equipment and complements European Union measures on landfill and incineration of waste. Increased recycling of electrical and electronic equipment, in accordance with the requirements of the WEEE Directive, will limit the total quantity of waste going to final disposal. Producers will be responsible for taking back and recycling electrical and electronic equipment. This will provide incentives to design electrical and electronic equipment in an environmentally more efficient way, which takes waste management aspects fully into account. For example, in order to prevent the generation of hazardous waste, the proposal for a Directive on the restriction of the use of certain hazardous substances requires the substitution of various heavy metals and brominated flame retardants in new electrical and electronic equipment from January 1, 2006 onwards.

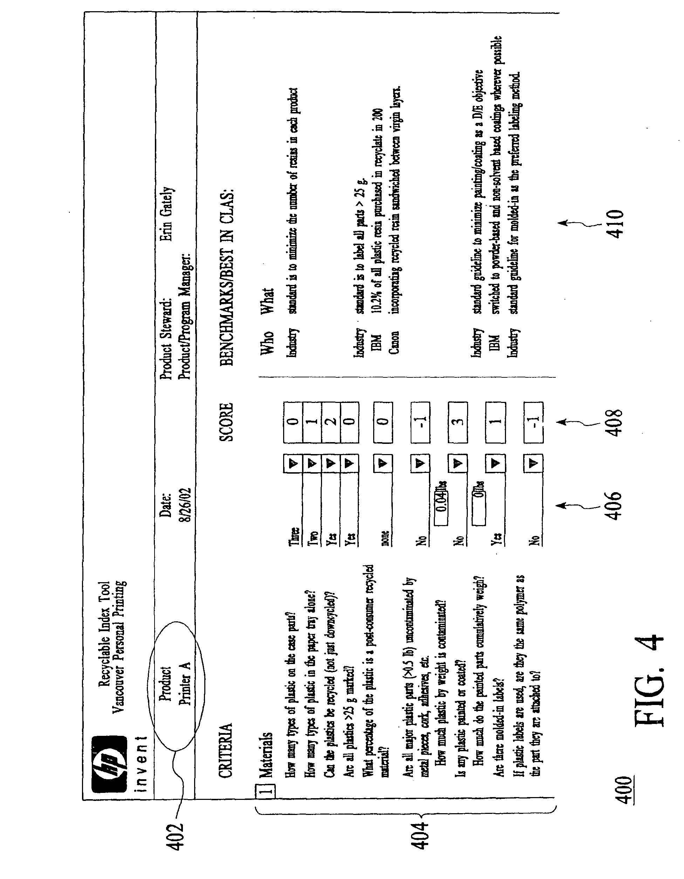

Figure 4 shows an example of a query sheet 400 in accordance with an embodiment of the present invention. The query sheet 400 includes a plurality of questions 404 related to a product 402. Potential answer choices 406 are displayed adjacent to the questions 404 In an embodiment, the answer choices 406 are displayed via a drop down menu. Also displayed are scores 408 related to specific answers. Also displayed are explanations 410 to specific issues/topics related to the questions/answers.

The questions 404 can be formulated and scored based on a variety of factors. In an embodiment, the scores 408 are based on a "status quo" wherein the status quo is defined as a typical answer to the question for the product. The status quo answer is then assigned a score value of "0". Points are then assigned for the other answers wherein an answer that is better than the status quo is given a positive value and an answer that is below the status quo is given a negative value.

The magnitude of the points can be based on the importance of the topic of the question. For example, if the topic of the question has a significant impact on the overall recyclability of the product, the scores can be proportianately weighted. For example, an important topic may have a +3 score for only one step above status quo whereas a less important topic may have a +1 for a step above status quo.

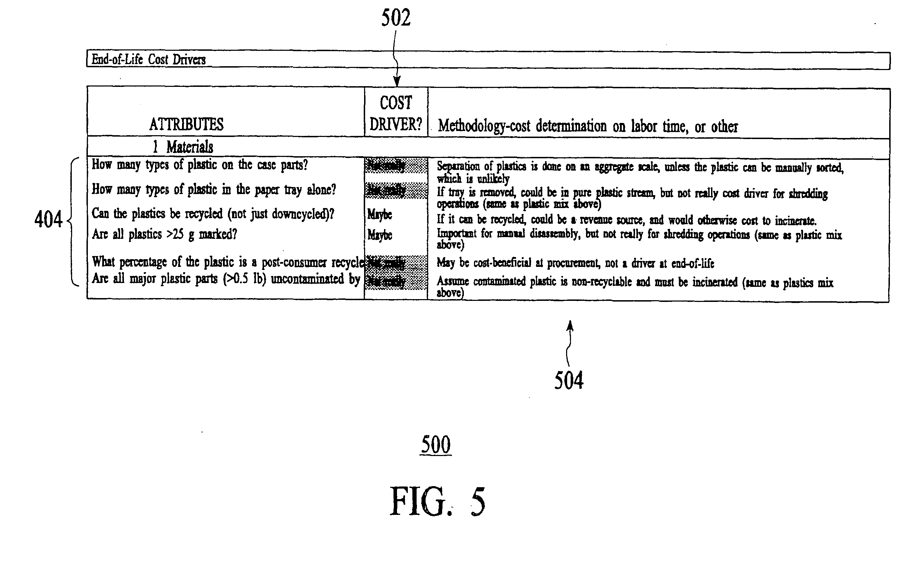

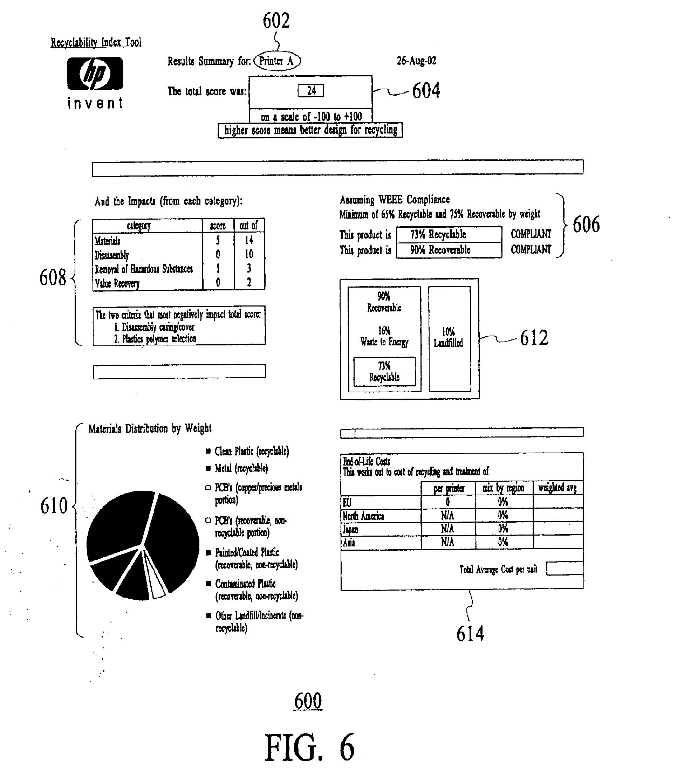

The index tool 204 also generates cost drivers for determining the end-of-life treatment cost of a product. The end-of-life (EOL) treatment cost of a product is the for reverse logistics, treatment and disposal of a product to the manufacturer after the product has reached the end of its useful consumer life. Figure 5 shows an EOL treatment sheet 500 in accordance with an embodiment of the present invention. The EOL treatment sheet 500 includes the plurality of questions 404 and a cost driver section 502. The cost driver section 502 includes a determination for each of the plurality of questions 404 as to whether the question relates to the EOL treatment cost of the product. The EOL treatment sheet 500 also includes explanations 504 for each of the plurality of questions 404 wherein the explanations 504 are related to EOL treatment issues. Once the responses to the plurality of questions 404 is entered into the query sheet 400, a summary sheet is generated based on the responses. Figure 6 shows a summary sheet 600 in accordance with an embodiment of the present invention. The summary sheet includes a calculated recyclability score 604 for the product 602 wherein the calculated score 604 is based on the responses to the questions 404. In an embodiment, the recyclability score 604 is a number between -100 and 100 which represents how well the product is designed for recycling, including disassembly, material, hazardous substances and potential value recovery. The better the design for recycling, the higher the score. The summary sheet 600 also includes a compliance section 606 wherein the recyclability percentages are displayed and whether these percentages are in compliance with specific regulatory standards. The summary sheet 600 also includes an impact section 608 wherein the impact section 608 includes scores associated with specific categories of questions.

Also shown in the summary sheet 600 is a material distribution section 610, a recyclability assessment section 612 and an end-of-life costs section 614. The material distribution section 612 displays a breakdown of the material distribution of the product 602. The recyclability assessment section 612 displays the percentages of specific recyclability criteria (percent recoverable, percent recyclable, etc.) Finally, the end-of-life costs section 614 displays the calculated costs related to the end-of-life treatment of the product 602.

Once the summary sheet 600 is generated, designers can review the displayed scores and determine whether to make specific changes to the product design. For example, if the compliance section 606 indicates that the product 602 is not in compliance with a specific regulatory guideline, the designer can return to the query sheet and review her responses to the questions in order to determine the specific design tradeoffs that need to take place in order for the product 602 to be compliant with the regulatory guideline.

The above-described embodiments of the invention may also be implemented, for example, by operating a computer system to execute a sequence of machine-readable instructions. The instructions may reside in various types of computer readable media. In this respect, another aspect of the present invention concerns a programmed product, comprising computer readable media tangibly embodying a program of machine readable instructions executable by a digital data processor to perform the method in accordance with an embodiment of the present invention.

This computer readable media may comprise, for example, RAM contained within the system. Alternatively, the instructions may be contained in another computer readable media such as a magnetic data storage diskette and directly or indirectly accessed by the computer system. Whether contained in the computer system or elsewhere, the instructions may be stored on a variety of machine readable storage media, such as a DASD storage (for example, a conventional "hard drive" or a RAID array), magnetic tape, electronic read-only memory, an optical storage device (for example, CD ROM, WORM, DVD, digital optical tape), paper "punch" cards, or other suitable computer readable media including transmission media such as digital, analog, and wireless communication links. In an illustrative embodiment of the invention, the machine-readable instructions may comprise lines of compiled C, C++, or similar language code commonly used by those skilled in the programming for this type of application arts.

Additionally, further characteristics of the features and considerations of the recyclability index tool 204, are available in detail in Metzger et al., "Recyclability Index, Version 3.2", January 15, 2003, which is incorporated herein by reference in its entirety.

A method and system for determining the recyclability of a product is disclosed. Through the use of the method and system in accordance with the present invention, the recyclability of a product can be calculated during the design phase of the product and subsequently utilized to adjust the design of the product to make sure that the product conforms with specific recyclability criteria.

Although the present invention has been described in accordance with the embodiments shown, one of ordinary skill in the art will readily recognize that there could be variations to the embodiments and those variations would be within the spirit and scope of the present invention. Accordingly, many modifications may be made by one of ordinary skill in the art without departing from the spirit and scope of the appended claims.

## Claims

1. A method for determining a recyclability of a product comprising:
implementing a query [400] based on a plurality of recyclability criteria of the product [402];
generating results [600] based on responses to the query [400]; and
determining the recyclability [604] of the product [402] based on the results [600] of the query [400].

2. The method of claim 1 wherein the recyclability of the product [402] comprises a percentage of the product [402] which is recyclable.

3. The method of claim 2 wherein the act of implementing the query [400] further comprises:
displaying a plurality of questions [404] related to the recyclability of the product [402] via a graphical user interface [202].

4. The method of claim 2 wherein the act of generating results [600] further comprises:
generating a plurality of scores [606-614] based on the responses to the query [400]; and
displaying the scores [606-614] via a graphical user interface [202].

5. The method of claim 2 wherein the act of determining the recyclability [604] of the product further comprises:
generating a summary sheet [600] wherein the summary sheet [600] includes a plurality of recyclability scores [604-614] related to the product; and
displaying the summary sheet [600] via a graphical user interface [202].

6. A system for determining the recyclability of a product comprising:
a graphical user interface [202]; and
a software tool [204] coupled to the graphical user interface [202] wherein the software tool [204] is capable of implementing a query [400] based on a plurality of recyclability criteria of the product [402], generating results [600] based on responses to the query [400] and determining the recyclability of the product [402] based on the results of the query [400].

7. The system of claim 6 wherein the recyclability of the product [402] comprises a percentage of the product [402] which is recyclable.

8. The system of claim 7 wherein implementing the query [400] further comprises:
displaying a plurality of questions [404] related to the recyclability of the product [402] via the graphical user interface [202].

9. The system of claim 7 wherein generating results [600] further comprises:
generating a plurality of scores [604-614] based on the responses to the query [400]; and
displaying the scores [604-614] via the graphical user interface [202].

10. The system of claim 7 wherein determining the recyclability of the product [402] further comprises:
generating a summary sheet [600] wherein the summary sheet [600] includes a plurality of recyclability scores [604-614] related to the product [402]; and
displaying the summary sheet [600] via the graphical user interface [202].
